# FASCICULE DE BREVET EUROPEEN

(11) **EP 4 310 008 B1**
(45) Date de publication et mention de la délivrance du brevet: **05.11.2025**
(21) Numéro de dépôt: 23185012.4
(22) Date de dépôt: 12.07.2023
(51) Int. Cl.: B64D 47/00

(54) **ENSEMBLE POUR AÉRONEF COMPORTANT UN CHÂSSIS ET UN MODULE DE VISION D'UN SYSTÈME DE VISION EN VOL AMÉLIORÉE**
ANORDNUNG FÜR EIN FLUGZEUG MIT EINEM RAHMEN UND EINEM SICHTMODUL EINES VERBESSERTEN FLUGSICHTSYSTEMS
ASSEMBLY FOR AN AIRCRAFT COMPRISING A FRAME AND A VISION MODULE OF AN IMPROVED IN-FLIGHT VISION SYSTEM

(30) Priorité: 18.07.2022 FR 2207303
(43) Date de publication de la demande: 24.01.2024
(73) Titulaire: AIRBUS OPERATIONS, 31060 Toulouse Cedex 9 (FR)
(72) Inventeur: BERTRAND, Sébastien, 31060 TOULOUSE (FR)
(74) Mandataire: Cabinet Le Guen Maillet

(56) Documents cités:
- EP-A1- 3 984 888
- WO-A1-2019/153821
- US-B1- 9 185 290

## Description

### DOMAINE TECHNIQUE

La présente invention concerne un ensemble pour un aéronef, ledit ensemble comportant un module de vision d'un système de vision en vol améliorée et un châssis pour fixer ledit module de vision, ainsi qu'un aéronef comportant un tel ensemble.

### ÉTAT DE LA TECHNIQUE ANTÉRIEURE

Un aéronef comporte classiquement un système de vision en vol améliorée. Ce système comporte généralement un module de vision avec plusieurs caméras, une unité de contrôle et un afficheur. Le module de vision est fixé à une structure de l'aéronef à l'avant du fuselage. Les caméras transmettent les images qu'elles capturent à l'unité de contrôle qui leur fait subir des traitements d'image afin de créer une image unique et qui transmet ensuite cette image unique à l'afficheur qui l'affiche. Ce système permet au pilote de voir ce qui se passe à l'avant du fuselage, plus particulièrement en cas de mauvais temps. Ce système est utilisable non seulement pendant les phases de vol mais également pendant les phases de décollage, d'atterrissage et de roulage.

Ce système de vision est plus particulièrement utilisé lors des décollages et atterrissages.

Pour que l'image restituée soit utilisable par le pilote, il faut que le module de vision soit fixé de manière très précise et reste dans la même position au cours de la vie de l'aéronef.

Le document US-B-9,185,290 décrit un système de capture d'images aériennes, comprenant des caméras fixées par vis sur un support centrale. Ce support centrale est lui même fixé par vis sur un cadre composé de deux supports latéraux connectés entre eux par un support amont et un support aval. Le document WO-A-2019/153821 divulguent des ensembles pour aéronef de l'état de la technique.

Il est donc nécessaire de trouver un arrangement qui garantit le bon positionnement du module de vision et donc des caméras au cours du temps.

### EXPOSÉ DE L'INVENTION

Un objet de la présente invention est de proposer un ensemble pour un aéronef, ledit ensemble comportant un module de vision d'un système de vision en vol améliorée avec au moins une caméra et un châssis pour fixer ledit module de vision à la structure de l'aéronef où le châssis permet un ajustement dans chaque direction.

À cet effet, est proposé un ensemble pour un aéronef, ledit ensemble comportant :
- un module de vision d'un système de vision en vol améliorée comportant une base, et
- un châssis comportant :
   - une première poutre à laquelle la base est fixée par quatre premiers moyens de fixation,
   - une deuxième poutre à laquelle la première poutre est fixée par quatre deuxièmes moyens de fixation, et
   - deux troisièmes poutres destinées à être fixées à une structure de l'aéronef et entre lesquelles la deuxième poutre est fixée par deux troisièmes moyens de fixation avec chaque troisième poutre,
où chaque moyen de fixation prend la forme d'un système à deux bagues excentriques où les deux bagues sont mobiles en rotation l'une par rapport à l'autre autour d'axes de rotation parallèles.

Avec un tel arrangement, les moyens de fixation à deux bagues excentriques permettent le réglage du châssis, le transfert des charges selon toutes les directions, et surtout le verrouillage des positions car la friction de chaque bague empêche le déréglage.

Il est également proposé un ensemble pour un aéronef, ledit ensemble comportant :
- un module de vision d'un système de vision en vol améliorée comportant une base, et
- un châssis comportant :
- deux premières poutres où la base est fixée à chaque première poutre par deux premiers moyens de fixation,
- une deuxième poutre à laquelle chaque première poutre est fixée par deux deuxièmes moyens de fixation, et
- deux troisièmes poutres destinées à être fixées à une structure de l'aéronef et entre lesquelles la deuxième poutre est fixée par deux troisièmes moyens de fixation avec chaque troisième poutre, où chaque moyen de fixation prend la forme d'un système à deux bagues excentriques où les deux bagues sont mobiles en rotation l'une par rapport à l'autre autour d'axes de rotation parallèles.

Avec un tel arrangement, les moyens de fixation à deux bagues excentriques permettent le réglage du châssis, le transfert des charges selon toutes les directions, et surtout le verrouillage des positions car la friction de chaque bague empêche le déréglage.

Avantageusement, les axes de rotation des premiers moyens de fixation sont orientés selon une première direction, les axes de rotation des deuxièmes moyens de fixation sont orientés selon une deuxième direction, les axes de rotation des troisièmes moyens de fixation sont orientés selon une troisième direction et la première direction, la deuxième direction et la troisième direction sont toutes différentes.

Avantageusement, la première direction, la deuxième direction et la troisième direction sont orthogonales entre elles deux à deux.

Avantageusement, chaque système de fixation comporte une vis, un écrou, une bague extérieure et une bague intérieure, pour chaque premier moyen de fixation, l'une parmi la première poutre ou la base présente un premier alésage dont le premier axe est parallèle aux axes de rotation dudit premier système de fixation, l'autre parmi la base ou la première poutre présente un deuxième alésage dont l'axe est parallèle au premier axe, la bague extérieure présente un épaulement extérieur en appui contre l'autre parmi la base ou la première poutre du côté opposé à l'une parmi la première poutre ou la base et un fût extérieur dont le diamètre extérieur est égal au diamètre du deuxième alésage, où l'épaulement extérieur et le fût extérieur sont percés d'un troisième alésage dont l'axe est désaxé par rapport à l'axe du fût extérieur et parallèle au premier axe, la bague intérieure présente un épaulement intérieur en appui contre l'épaulement extérieur du côté opposé à l'autre parmi la base ou la première poutre et un fût intérieur dont le diamètre extérieur est égal au diamètre du troisième alésage, où l'épaulement intérieur et le fût intérieur sont percés d'un quatrième alésage dont l'axe est désaxé par rapport à l'axe du fût intérieur et parallèle au premier axe et dont le diamètre est égal au diamètre du premier alésage et la tige de la vis est insérée dans le quatrième alésage et le premier alésage, la tête de la vis est contre l'épaulement intérieur et l'écrou est contre l'une parmi la première poutre ou la base à l'opposé de l'autre parmi la base ou la première poutre, pour chaque deuxième moyen de fixation, l'une parmi la première poutre ou la deuxième poutre présente un premier alésage dont le premier axe est parallèle aux axes de rotation dudit deuxième système de fixation, l'autre parmi la deuxième poutre ou la première poutre présente un deuxième alésage dont l'axe est parallèle au premier axe, la bague extérieure présente un épaulement extérieur en appui contre l'autre parmi la deuxième poutre ou la première poutre du côté opposé à l'une parmi la première poutre ou la deuxième poutre et un fût extérieur dont le diamètre extérieur est égal au diamètre du deuxième alésage, où l'épaulement extérieur et le fût extérieur sont percés d'un troisième alésage dont l'axe est désaxé par rapport à l'axe du fût extérieur et parallèle au premier axe, la bague intérieure présente un épaulement intérieur en appui contre l'épaulement extérieur du côté opposé à l'autre parmi la deuxième poutre ou la première poutre et un fût intérieur dont le diamètre extérieur est égal au diamètre du troisième alésage, où l'épaulement intérieur et le fût intérieur sont percés d'un quatrième alésage dont l'axe est désaxé par rapport à l'axe du fût intérieur et parallèle au premier axe et dont le diamètre est égal au diamètre du premier alésage et la tige de la vis est insérée dans le quatrième alésage et le premier alésage, la tête de la vis est contre l'épaulement intérieur et l'écrou est contre l'une parmi la première poutre ou la deuxième poutre à l'opposé de l'autre parmi la deuxième poutre ou la première poutre, et pour chaque troisième moyen de fixation, l'une parmi l'une des troisièmes poutres ou la deuxième poutre présente un premier alésage dont le premier axe est parallèle aux axes de rotation dudit troisième système de fixation, l'autre parmi la deuxième poutre ou l'une des troisièmes poutres présente un deuxième alésage dont l'axe est parallèle au premier axe, la bague extérieure présente un épaulement extérieur en appui contre l'autre parmi la deuxième poutre ou l'une des troisièmes poutres du côté opposé à l'une parmi l'une des troisièmes poutres ou la deuxième poutre et un fût extérieur dont le diamètre extérieur est égal au diamètre du deuxième alésage, où l'épaulement extérieur et le fût extérieur sont percés d'un troisième alésage dont l'axe est désaxé par rapport à l'axe du fût extérieur et parallèle au premier axe, la bague intérieure présente un épaulement intérieur en appui contre l'épaulement extérieur du côté opposé à l'autre parmi la deuxième poutre ou l'une des troisièmes poutres et un fût intérieur dont le diamètre extérieur est égal au diamètre du troisième alésage, où l'épaulement intérieur et le fût intérieur sont percés d'un quatrième alésage dont l'axe est désaxé par rapport à l'axe du fût intérieur et parallèle au premier axe et dont le diamètre est égal au diamètre du premier alésage et la tige de la vis est insérée dans le quatrième alésage et le premier alésage, la tête de la vis est contre l'épaulement intérieur et l'écrou est contre l'une parmi l'une des troisièmes poutres ou la deuxième poutre à l'opposé de l'autre parmi la deuxième poutre ou l'une des troisièmes poutres.

L'invention propose également un aéronef comportant une structure et un ensemble selon l'un des deux modes de réalisation précédents où chaque troisième poutre est fixée à ladite structure.

Avantageusement, les axes de rotation des premiers moyens de fixation sont orientés selon une première direction, les axes de rotation des deuxièmes moyens de fixation sont orientés selon une deuxième direction, les axes de rotation des troisièmes moyens de fixation sont orientés selon une troisième direction, la première direction est parallèle à une direction verticale de l'aéronef, la deuxième direction est parallèle à une direction longitudinale de l'aéronef et la troisième direction est parallèle à une direction transversale de l'aéronef.

Avantageusement, chaque troisième poutre est fixée à la structure par deux quatrièmes systèmes de fixation où chaque quatrième moyen de fixation prend la forme d'un système à deux bagues excentriques où les deux bagues sont mobiles en rotation l'une par rapport à l'autre autour d'axes de rotation parallèles.

Avantageusement, chaque quatrième système de fixation comporte une vis, un écrou, une bague extérieure et une bague intérieure et pour chaque quatrième moyen de fixation, l'une parmi la troisième poutre ou la structure présente un premier alésage dont le premier axe est parallèle aux axes de rotation dudit quatrième moyen de fixation, l'autre parmi la structure ou la troisième poutre présente un deuxième alésage dont l'axe est parallèle au premier axe, la bague extérieure présente un épaulement extérieur en appui contre l'autre parmi la structure ou la troisième poutre du côté opposé à l'une parmi la troisième poutre ou la structure et un fût extérieur dont le diamètre extérieur est égal au diamètre du deuxième alésage, où l'épaulement extérieur et le fût extérieur sont percés d'un troisième alésage dont l'axe est désaxé par rapport à l'axe du fût extérieur et parallèle au premier axe, la bague intérieure présente un épaulement intérieur en appui contre l'épaulement extérieur du côté opposé à l'autre parmi la structure ou la troisième poutre et un fût intérieur dont le diamètre extérieur est égal au diamètre du troisième alésage, où l'épaulement intérieur et le fût intérieur sont percés d'un quatrième alésage dont l'axe est désaxé par rapport à l'axe du fût intérieur et parallèle au premier axe et dont le diamètre est égal au diamètre du premier alésage et la tige de la vis est insérée dans le quatrième alésage et le premier alésage, la tête de la vis est contre l'épaulement intérieur et l'écrou est contre l'une parmi la troisième poutre ou la structure à l'opposé de l'autre parmi la structure ou la troisième poutre.

Avantageusement, les axes de rotation de chaque quatrième moyen de fixation sont orientés selon une direction parallèle à une direction longitudinale de l'aéronef.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef comportant un ensemble selon l'invention,
[Fig. 2] est une vue en perspective d'un système de vision en vol améliorée comportant un ensemble selon un premier mode de réalisation de l'invention,
[Fig. 3] est une vue en coupe d'un moyen de fixation à deux bagues excentriques, et
[Fig. 4] est une vue en perspective d'un système de vision en vol améliorée comportant un ensemble selon un deuxième mode de réalisation de l'invention.

### EXPOSÉ DÉTAILLÉ DE MODES DE RÉALISATION

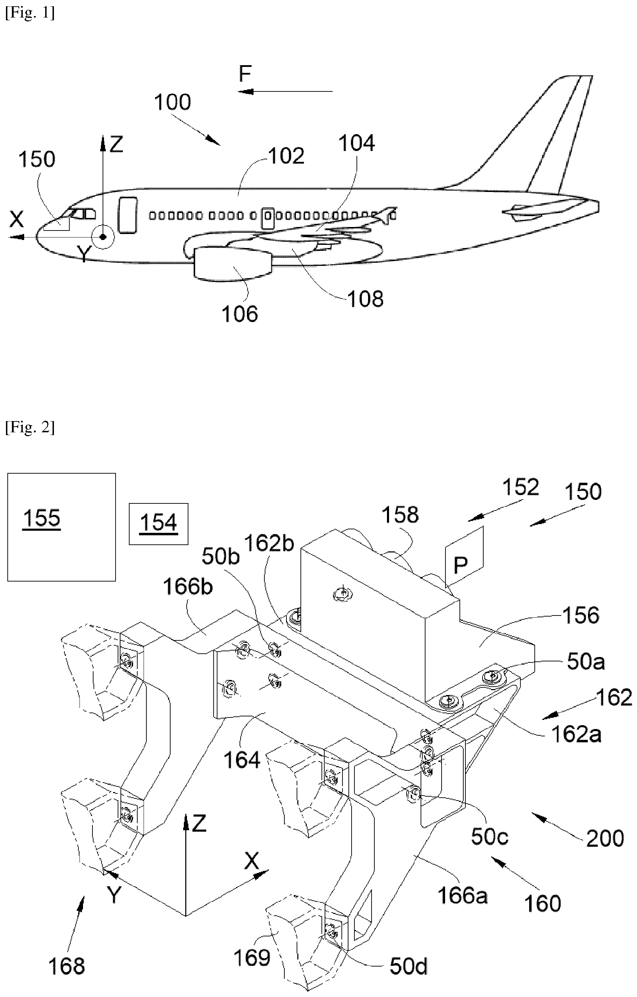

La Fig. 1 montre un aéronef 100 qui comporte un fuselage 102 de chaque côté duquel est fixée une aile 104 qui porte au moins un réacteur 106. La fixation du réacteur 106 sous l'aile 104 s'effectue par l'intermédiaire d'un mât 108.

Dans la description qui suit, et par convention, on appelle X la direction longitudinale de l'aéronef 100 orientée positivement vers l'avant de l'aéronef 100, on appelle Y la direction transversale qui est horizontale lorsque l'aéronef est au sol, et Z la direction verticale, ces trois directions X, Y et Z étant orthogonales entre elles.

D'autre part, les termes " avant " et " arrière " sont à considérer par rapport à une direction d'avancement de l'aéronef 100 lors du fonctionnement du réacteur 106, cette direction étant représentée schématiquement par la flèche F sur la Fig. 1.

L'aéronef 100 comporte un système de vision en vol améliorée 150 qui est représenté à la Fig. 2. Le système de vision en vol améliorée 150 est représenté sur la Fig. 1 en partie haute du nez de l'aéronef 100, mais une autre position est possible, par exemple en partie basse du nez.

Le système de vision en vol améliorée 150 comporte un module de vision 152 comportant une base 156 sur laquelle au moins une caméra 158 est fixée et orientée vers l'avant de l'aéronef 100, une unité de contrôle 154 et un afficheur 155 qui est arrangé dans la cabine de pilotage de manière à être vu par le pilote. L'unité de contrôle 154 et l'afficheur 155 ne sont pas décrits plus précisément car ils ne font pas partie de l'invention en tant que tels et ils peuvent prendre la même forme que dans le cas de l'état de la technique. Comme pour l'état de la technique, les images captées par les caméras sont traitées par l'unité de contrôle 154 et une image unique est envoyée à l'afficheur 155.

De la même manière, le nombre de caméras 158 et le type de caméra 158 du module de vision 152 ne sont pas décrits plus précisément car ils ne font pas partie de l'invention en tant que tels et ils peuvent prendre la même forme que dans le cas de l'état de la technique.

La Fig. 2 montre également un châssis 160 qui porte le module de vision 152 et forme avec lui un ensemble 200 selon l'invention. La Fig. 2 montre l'ensemble 200 selon un premier mode de réalisation.

Le châssis 160 comporte une première poutre 162 à laquelle la base 156 est fixée par quatre premiers moyens de fixation 50a.

Le châssis 160 comporte une deuxième poutre 164 à laquelle la première poutre 162 est fixée par quatre deuxièmes moyens de fixation 50b.

Le châssis 160 comporte deux troisièmes poutres 166a-b qui sont fixées à une structure 168 (en traits fantôme) de l'aéronef 100 et entre lesquelles la deuxième poutre 164 est fixée par quatre troisièmes moyens de fixation 50c, à savoir deux troisièmes moyens de fixation 50c entre la deuxième poutre 164 et chaque troisième poutre 166a-b.

Les premiers moyens de fixation 50a, les deuxièmes moyens de fixation 50b et les troisièmes moyens de fixation 50c sont identiques.

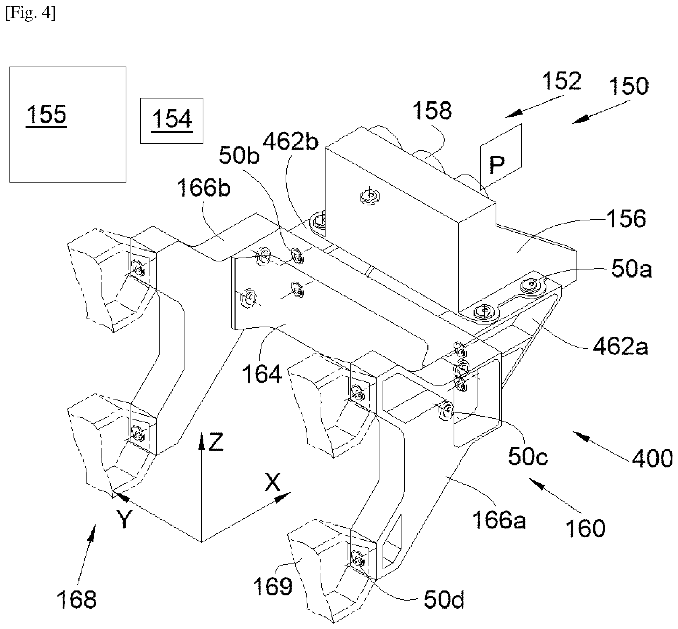

Chaque troisième poutre 166a-b est fixée à la structure 168 qui comporte ici quatre sabots 169 (représentés ici en traits fantôme sur les Figs. 2 et 4) et chaque troisième poutre 166a-b est fixée à deux de ces sabots 169 par un quatrième système de fixation 50d. Chaque troisième poutre 166a-b est ainsi fixée à la structure 168 par deux quatrièmes systèmes de fixation 50d.

Les quatrièmes systèmes de fixation 50d sont identiques aux premiers, deuxièmes et troisièmes moyens de fixation 50a-c.

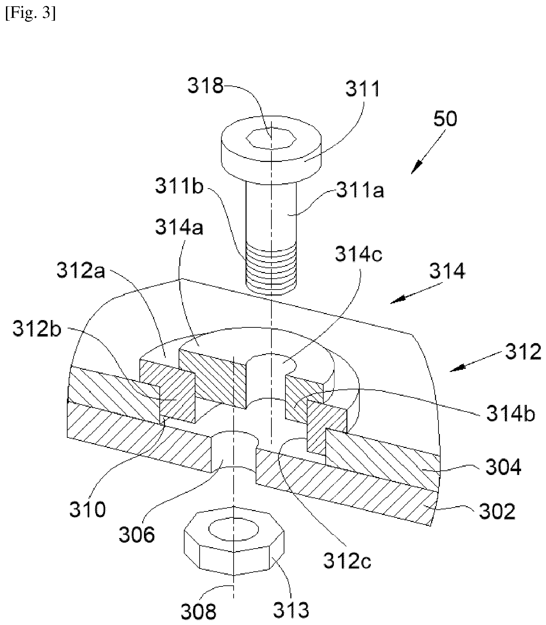

La Fig. 3 montre une coupe d'un système de fixation 50 mis en place entre une première plaque 302 et une deuxième plaque 304 qui peuvent être les poutres 162, 164, 166a-b, la base 156 ou la structure 168. Les deux plaques 302 et 304 sont parallèles entre elles et en appui l'une contre l'autre.

La première plaque 302 présente un premier alésage 306 présentant un premier axe 308.

La deuxième plaque 304 présente un deuxième alésage 310 dont l'axe est parallèle au premier axe 308 et dont le diamètre est supérieur au diamètre du premier alésage 306.

Le système de fixation 50 est un système à deux bagues excentriques 312 et 314 où les deux bagues 312 et 314 sont mobiles en rotation l'une par rapport à l'autre autour de deux axes de rotation parallèles entre eux et parallèles au premier axe 308.

Le système de fixation 50 comporte ici un boulon avec une vis 311 et un écrou 313, une bague extérieure 312 et une bague intérieure 314.

La bague extérieure 312 présente un épaulement extérieur 312a qui est en appui contre la deuxième plaque 304 du côté opposé à la première plaque 302 et un fût extérieur 312b dont le diamètre extérieur est égal au diamètre du deuxième alésage 310. L'épaulement extérieur 312a et le fût extérieur 312b sont percés d'un troisième alésage 312c dont l'axe est désaxé par rapport à l'axe du fût extérieur 312b, parallèle au premier axe 308 et dont le diamètre est supérieur au diamètre du premier alésage 306.

La bague intérieure 314 présente un épaulement intérieur 314a qui est en appui contre l'épaulement extérieur 312a du côté opposé à la deuxième plaque 304 et un fût intérieur 314b dont le diamètre extérieur est égal au diamètre du troisième alésage 312c. L'épaulement intérieur 314a et le fût intérieur 314b sont percés d'un quatrième alésage 314c dont l'axe, dit deuxième axe 318, est désaxé par rapport à l'axe du fût intérieur 314b, parallèle au premier axe 308 et dont le diamètre est égal au diamètre du premier alésage 306.

Ainsi, en faisant tourner la bague extérieure 312 et la bague intérieure 314 autour de leurs axes de rotation, il est possible d'aligner le premier axe 308 et le deuxième axe 318. Il est alors possible d'insérer la tige de la vis 311 dans le quatrième alésage 314c et le premier alésage 306 en amenant la tête contre l'épaulement intérieur 314a et en serrant l'écrou 313 contre la première plaque 302 à l'opposé de la deuxième plaque 304.

La tige de la vis 311 comporte une zone lisse 311a du côté de sa tête et une zone filetée 311b à l'opposé de sa tête. Préférentiellement, la vis 311 est dimensionnée pour que la zone lisse 311a s'étende le long du premier alésage 306 et du quatrième alésage 314c et la zone filetée 311b est au-delà du premier alésage 306. La zone de la vis 311 qui est dans le premier alésage 306 et le quatrième alésage 314c, ici la zone lisse 311a, est enfilée et ajustée en diamètre à l'intérieur du premier alésage 306 et du quatrième alésage 314c.

Les deux bagues 312 et 314 sont logées et montées ajustées en diamètre dans les alésages correspondants, à savoir le deuxième alésage 310 et le troisième alésage 312c.

Il est à noter que la notion de montage ajusté consiste à avoir une jonction présentant un axe et un alésage au même diamètre nominal et avec un jeu réduit à son minimum pour en permettre l'assemblage. Un tel montage ajusté est par exemple du type H7g6.

Avec un tel système de fixation 50, les deux plaques 302 et 304 sont parfaitement fixées l'une à l'autre et sans jeu excessif.

L'utilisation de quatre moyens de fixation 50a-c pour fixer deux poutres ensemble ou la base 156 et une poutre, empêche qu'un déréglage apparaisse car il est peu probable que les quatre moyens de fixations se dérèglent simultanément du fait de la friction entre les bagues 312 et 314. En effet, un mouvement de translation de la plaque 302 par rapport à la plaque 304 supposerait une parfaite combinaison de rotation des bagues excentriques 312 et 314. Cette combinaison étant hautement improbable, l'ensemble 200 présente une caractéristique d'irréversibilité une fois les différentes poutres mises en place.

Dans le premier mode de réalisation de l'invention présenté à la Fig. 2, la base 156 est fixée à la première poutre 162 par les quatre premiers moyens de fixation 50a dont les axes de rotation sont parallèles à la direction verticale Z. Les quatre premiers moyens de fixation 50a sont disposés par paires de part et d'autre d'un plan médian P de l'ensemble 200 qui est parallèle au plan vertical XZ. La première poutre 162 constitue alors la première plaque 302 et la base 156 constitue alors la deuxième plaque 304, mais un arrangement inverse est possible.

Dans le premier mode de réalisation de l'invention présenté à la Fig. 2, la première poutre 162 est fixée à la deuxième poutre 164 par les quatre deuxièmes moyens de fixation 50b dont les axes de rotation sont parallèles à la direction longitudinale X. Les quatre deuxièmes moyens de fixation 50b sont disposés par paires de part et d'autre du plan médian P de l'ensemble 200. La deuxième poutre 164 constitue alors la première plaque 302 et la première poutre 162 constitue alors la deuxième plaque 304, mais un arrangement inverse est possible.

Dans le premier mode de réalisation de l'invention présenté à la Fig. 2, la deuxième poutre 164 est fixée à chaque troisième poutre 166a-b par les deux troisièmes moyens de fixation 50c dont les axes de rotation sont parallèles à la direction transversale Y. Les troisièmes poutres 166a-b sont disposées de part et d'autre du plan médian P de l'ensemble 200. La deuxième poutre 164 constitue alors la première plaque 302 et chaque troisième poutre 166a-b constitue alors une deuxième plaque 304, mais un arrangement inverse est possible.

Ainsi, d'une manière générale, pour assurer le réglage selon trois directions, les axes de rotation des premiers moyens de fixation 50a entre la base 156 et la première poutre 162 sont orientés selon une première direction, les axes de rotation des deuxièmes moyens de fixation 50b entre la première poutre 162 et la deuxième poutre 164 sont orientés selon une deuxième direction et les axes de rotation des troisièmes moyens de fixation 50c entre la deuxième poutre 164 et les troisièmes poutres 166a-b sont orientés selon une troisième direction, où la première direction, la deuxième direction et la troisième direction sont toutes différentes et préférentiellement sont orthogonales entre elles deux à deux.

Dans le premier mode de réalisation de l'invention présenté ici, la première direction est parallèle à la direction verticale Z de l'aéronef 100, la deuxième direction est parallèle à la direction longitudinale X de l'aéronef 100 et la troisième direction est parallèle à la direction transversale Y de l'aéronef 100.

D'une manière générale, pour chaque premier moyen de fixation 50a, l'une parmi la première poutre 162 ou la base 156 présente un premier alésage 306 dont le premier axe 308 est parallèle aux axes de rotation dudit premier système de fixation 50a, l'autre parmi la base 156 ou la première poutre 162 présente un deuxième alésage 310 dont l'axe est parallèle au premier axe 308, la bague extérieure 312 présente un épaulement extérieur 312a en appui contre l'autre parmi la base 156 ou la première poutre 162 du côté opposé à l'une parmi la première poutre 162 ou la base 156 et un fût extérieur 312b dont le diamètre extérieur est égal au diamètre du deuxième alésage 310, où l'épaulement extérieur 312a et le fût extérieur 312b sont percés d'un troisième alésage 312c dont l'axe est désaxé par rapport à l'axe du fût extérieur 312b et parallèle au premier axe 308, la bague intérieure 314 présente un épaulement intérieur 314a en appui contre l'épaulement extérieur 312a du côté opposé à l'autre parmi la base 156 ou la première poutre 162 et un fût intérieur 314b dont le diamètre extérieur est égal au diamètre du troisième alésage 312c, où l'épaulement intérieur 314a et le fût intérieur 314b sont percés d'un quatrième alésage 314c dont l'axe 318 est désaxé par rapport à l'axe du fût intérieur 314b et parallèle au premier axe 308 et dont le diamètre est égal au diamètre du premier alésage 306 et la tige de la vis 311 est insérée dans le quatrième alésage 314c et le premier alésage 306, la tête de la vis 311 est contre l'épaulement intérieur 314a et l'écrou 313 est contre l'une parmi la première poutre 162 ou la base 156 à l'opposé de l'autre parmi la base 156 ou la première poutre 162.

De la même manière, pour chaque deuxième moyen de fixation 50b, l'une parmi la première poutre 162 ou la deuxième poutre 164 présente un premier alésage 306 dont le premier axe 308 est parallèle aux axes de rotation dudit deuxième système de fixation 50b, l'autre parmi la deuxième poutre 164 ou la première poutre 162 présente un deuxième alésage 310 dont l'axe est parallèle au premier axe 308, la bague extérieure 312 présente un épaulement extérieur 312a en appui contre l'autre parmi la deuxième poutre 164 ou la première poutre 162 du côté opposé à l'une parmi la première poutre 162 ou la deuxième poutre 164 et un fût extérieur 312b dont le diamètre extérieur est égal au diamètre du deuxième alésage 310, où l'épaulement extérieur 312a et le fût extérieur 312b sont percés d'un troisième alésage 312c dont l'axe est désaxé par rapport à l'axe du fût extérieur 312b et parallèle au premier axe 308, la bague intérieure 314 présente un épaulement intérieur 314a en appui contre l'épaulement extérieur 312a du côté opposé à l'autre parmi la deuxième poutre 164 ou la première poutre 162 et un fût intérieur 314b dont le diamètre extérieur est égal au diamètre du troisième alésage 312c, où l'épaulement intérieur 314a et le fût intérieur 314b sont percés d'un quatrième alésage 314c dont l'axe 318 est désaxé par rapport à l'axe du fût intérieur 314b et parallèle au premier axe 308 et dont le diamètre est égal au diamètre du premier alésage 306 et la tige de la vis 311 est insérée dans le quatrième alésage 314c et le premier alésage 306, la tête de la vis 311 est contre l'épaulement intérieur 314a et l'écrou 313 est contre l'une parmi la première poutre 162 ou la deuxième poutre 164 à l'opposé de l'autre parmi la deuxième poutre 164 ou la première poutre 162.

De la même manière, pour chaque troisième moyen de fixation 50c, l'une parmi l'une des troisièmes poutres 166a-b ou la deuxième poutre 164 présente un premier alésage 306 dont le premier axe 308 est parallèle aux axes de rotation dudit troisième système de fixation 50c, l'autre parmi la deuxième poutre 164 ou l'une des troisièmes poutres 166a-b présente un deuxième alésage 310 dont l'axe est parallèle au premier axe 308, la bague extérieure 312 présente un épaulement extérieur 312a en appui contre l'autre parmi la deuxième poutre 164 ou l'une des troisièmes poutres 166a-b du côté opposé à l'une parmi l'une des troisièmes poutres 166a-b ou la deuxième poutre 164 et un fût extérieur 312b dont le diamètre extérieur est égal au diamètre du deuxième alésage 310, où l'épaulement extérieur 312a et le fût extérieur 312b sont percés d'un troisième alésage 312c dont l'axe est désaxé par rapport à l'axe du fût extérieur 312b et parallèle au premier axe 308, la bague intérieure 314 présente un épaulement intérieur 314a en appui contre l'épaulement extérieur 312a du côté opposé à l'autre parmi la deuxième poutre 164 ou l'une des troisièmes poutres 166a-b et un fût intérieur 314b dont le diamètre extérieur est égal au diamètre du troisième alésage 312c, où l'épaulement intérieur 314a et le fût intérieur 314b sont percés d'un quatrième alésage 314c dont l'axe 318 est désaxé par rapport à l'axe du fût intérieur 314b et parallèle au premier axe 308 et dont le diamètre est égal au diamètre du premier alésage 306 et la tige de la vis 311est insérée dans le quatrième alésage 314c et le premier alésage 306, la tête de la vis 311 est contre l'épaulement intérieur 314a et l'écrou 313 est contre l'une parmi l'une des troisièmes poutres 166a-b ou la deuxième poutre 164 à l'opposé de l'autre parmi la deuxième poutre 164 ou l'une des troisièmes poutres 166a-b.

Dans le premier mode de réalisation de l'invention présenté à la Fig. 2, les axes de rotation de chaque quatrième système de fixation 50d sont orientés selon une direction parallèle à la direction longitudinale X.

Comme précédemment, chaque quatrième système de fixation 50d comporte une vis 311, un écrou 313, une bague extérieure 312 et une bague intérieure 314. Pour chaque quatrième moyen de fixation 50d, l'une parmi la troisième poutre 166a-b ou la structure 168 présente un premier alésage 306 dont le premier axe 308 est parallèle aux axes de rotation dudit quatrième moyen de fixation 50d, l'autre parmi la structure 168 ou la troisième poutre 166a-b présente un deuxième alésage 310 dont l'axe est parallèle au premier axe 308, la bague extérieure 312 présente un épaulement extérieur 312a en appui contre l'autre parmi la structure 168 ou la troisième poutre 166a-b du côté opposé à l'une parmi la troisième poutre 166a-b ou la structure 168 et un fût extérieur 312b dont le diamètre extérieur est égal au diamètre du deuxième alésage 310, où l'épaulement extérieur 312a et le fût extérieur 312b sont percés d'un troisième alésage 312c dont l'axe est désaxé par rapport à l'axe du fût extérieur 312b et parallèle au premier axe 308, la bague intérieure 314 présente un épaulement intérieur 314a en appui contre l'épaulement extérieur 312a du côté opposé à l'autre parmi la structure 168 ou la troisième poutre 166a-b et un fût intérieur 314b dont le diamètre extérieur est égal au diamètre du troisième alésage 312c, où l'épaulement intérieur 314a et le fût intérieur 314b sont percés d'un quatrième alésage 314c dont l'axe 318 est désaxé par rapport à l'axe du fût intérieur 314b et parallèle au premier axe 308 et dont le diamètre est égal au diamètre du premier alésage 306 et la tige de la vis 311 est insérée dans le quatrième alésage 314c et le premier alésage 306, la tête de la vis 311 est contre l'épaulement intérieur 314a et l'écrou 313 est contre l'une parmi la troisième poutre 166a-b ou la structure 168 à l'opposé de l'autre parmi la structure 168 ou la troisième poutre 166a-b.

Dans le premier mode de réalisation de l'invention présenté à la Fig. 2, la première poutre 162 prend la forme d'une fourche à deux dents 162a-b où la base 156 est logée entre les dents 162a-b et où chaque premier moyen de fixation 50a est monté entre la base 156 et une des dents 162a-b. Chaque dent 162a-b s'étend parallèlement à la direction longitudinale X et donc perpendiculairement aux axes de rotation des premiers moyens de fixation 50a.

Dans le premier mode de réalisation de l'invention, la première poutre 162 est constituée d'un seul élément, mais selon une variante, la première poutre 162 peut être constituée de plusieurs éléments fixés les uns aux autres par des éléments de fixation comme des systèmes vis-écrou, des rivets, etc.

La Fig. 4 montre un ensemble 400 selon un deuxième mode de réalisation. Les éléments décrits pour le premier mode de réalisation s'appliquent de la même manière au deuxième mode de réalisation et dans ce deuxième mode de réalisation, la seule différence réside dans le fait que la première poutre 162 est remplacée par deux premières poutres 462a-b constituant ici chacune une des dents de la fourche décrite ci-dessus.

L'ensemble 400 comporte le module de vision 152 avec sa base 156, et un châssis 160 qui comporte les deux premières poutres 462a-b et où la base 156 est fixée à chaque première poutre 462a-b par deux premiers moyens de fixation 50a.

Dans le deuxième mode de réalisation, chaque première poutre 462a-b est fixée à la deuxième poutre 164 par deux deuxièmes moyens de fixation 50b.

Comme pour le premier mode de réalisation, il y a deux troisièmes poutres 166a-b fixées à la structure 168 et où la deuxième poutre 164 est fixée par deux troisièmes moyens de fixation 50c avec chaque troisième poutre 166a-b.

Comme dans le premier mode de réalisation, chaque moyen de fixation 50a-c prend la forme d'un système à deux bagues excentriques 312, 314 où les deux bagues 312, 314 sont mobiles en rotation l'une par rapport à l'autre autour d'axes de rotation parallèles.

Comme pour le premier mode de réalisation, l'utilisation de plusieurs moyens de fixation 50a-c pour fixer deux poutres ensemble empêche qu'un déréglage apparaisse car il est peu probable que les moyens de fixations se dérèglent simultanément du fait de la friction entre les bagues 312 et 314. Dans le deuxième mode de réalisation, il y a deux moyens de fixation pour fixer la base 156 à chaque première poutre 462a-b et chaque première poutre 462a-b à la deuxième poutre 164 au lieu de quatre mais un déréglage du montage supposerait une parfaite combinaison de rotation des bagues excentriques 312 et 314 ce qui est également hautement improbable.

## Revendications

1. Ensemble (200, 400) pour un aéronef (100), ledit ensemble (200, 400) comportant :
- un module de vision (152) d'un système de vision en vol améliorée (150) comportant une base (156), et
- un châssis (160) comportant :
- une première poutre (162, 462a-b) à laquelle la base (156) est fixée par quatre premiers moyens de fixation (50a),
- une deuxième poutre (164) à laquelle la première poutre (162) est fixée par quatre deuxièmes moyens de fixation (50b), et
- deux troisièmes poutres (166a-b) destinées à être fixées à une structure (168) de l'aéronef (100) et entre lesquelles la deuxième poutre (164) est fixée par deux troisièmes moyens de fixation (50c) avec chaque troisième poutre (166a-b),
où chaque moyen de fixation (50a-c) prend la forme d'un système à deux bagues excentriques (312, 314) où les deux bagues (312, 314) sont mobiles en rotation l'une par rapport à l'autre autour d'axes de rotation parallèles.

2. Ensemble (400) pour un aéronef (100), ledit ensemble (400) comportant :
- un module de vision (152) d'un système de vision en vol améliorée (150) comportant une base (156), et- un châssis (160) comportant :
- deux premières poutres (462a-b) où la base (156) est fixée à chaque première poutre (462a-b) par deux premiers moyens de fixation (50a),
- une deuxième poutre (164) à laquelle chaque première poutre (462a-b) est fixée par deux deuxièmes moyens de fixation (50b), et
- deux troisièmes poutres (166a-b) destinées à être fixées à une structure (168) de l'aéronef (100) et entre lesquelles la deuxième poutre (164) est fixée par deux troisièmes moyens de fixation (50c) avec chaque troisième poutre (166a-b),
où chaque moyen de fixation (50a-c) prend la forme d'un système à deux bagues excentriques (312, 314) où les deux bagues (312, 314) sont mobiles en rotation l'une par rapport à l'autre autour d'axes de rotation parallèles.

3. Ensemble (200, 400) selon l'une des revendications 1 ou 2, **caractérisé en ce que** les axes de rotation des premiers moyens de fixation (50a) sont orientés selon une première direction, **en ce que** les axes de rotation des deuxièmes moyens de fixation (50b) sont orientés selon une deuxième direction, **en ce que** les axes de rotation des troisièmes moyens de fixation (50c) sont orientés selon une troisième direction et **en ce que** la première direction, la deuxième direction et la troisième direction sont toutes différentes.

4. Ensemble (200, 400) selon la revendication 2, **caractérisé en ce que** la première direction, la deuxième direction et la troisième direction sont orthogonales entre elles deux à deux.

5. Ensemble (200, 400) selon l'une des revendications 1 à 4, **caractérisé en ce que** chaque système de fixation (50a-c) comporte une vis (311), un écrou (313), une bague extérieure (312) et une bague intérieure (314), **en ce que** pour chaque premier moyen de fixation (50a), l'une parmi la première poutre (162) ou la base (156) présente un premier alésage (306) dont le premier axe (308) est parallèle aux axes de rotation dudit premier système de fixation (50a), l'autre parmi la base (156) ou la première poutre (162) présente un deuxième alésage (310) dont l'axe est parallèle au premier axe (308), la bague extérieure (312) présente un épaulement extérieur (312a) en appui contre l'autre parmi la base (156) ou la première poutre (162) du côté opposé à l'une parmi la première poutre (162) ou la base (156) et un fût extérieur (312b) dont le diamètre extérieur est égal au diamètre du deuxième alésage (310), où l'épaulement extérieur (312a) et le fût extérieur (312b) sont percés d'un troisième alésage (312c) dont l'axe est désaxé par rapport à l'axe du fût extérieur (312b) et parallèle au premier axe (308), la bague intérieure (314) présente un épaulement intérieur (314a) en appui contre l'épaulement extérieur (312a) du côté opposé à l'autre parmi la base (156) ou la première poutre (162) et un fût intérieur (314b) dont le diamètre extérieur est égal au diamètre du troisième alésage (312c), où l'épaulement intérieur (314a) et le fût intérieur (314b) sont percés d'un quatrième alésage (314c) dont l'axe (318) est désaxé par rapport à l'axe du fût intérieur (314b) et parallèle au premier axe (308) et dont le diamètre est égal au diamètre du premier alésage (306) et la tige de la vis (311) est insérée dans le quatrième alésage (314c) et le premier alésage (306), la tête de la vis (311) est contre l'épaulement intérieur (314a) et l'écrou (313) est contre l'une parmi la première poutre (162) ou la base (156) à l'opposé de l'autre parmi la base (156) ou la première poutre (162), **en ce que** pour chaque deuxième moyen de fixation (50b), l'une parmi la première poutre (162) ou la deuxième poutre (164) présente un premier alésage (306) dont le premier axe (308) est parallèle aux axes de rotation dudit deuxième système de fixation (50b), l'autre parmi la deuxième poutre (164) ou la première poutre (162) présente un deuxième alésage (310) dont l'axe est parallèle au premier axe (308), la bague extérieure (312) présente un épaulement extérieur (312a) en appui contre l'autre parmi la deuxième poutre (164) ou la première poutre (162) du côté opposé à l'une parmi la première poutre (162) ou la deuxième poutre (164) et un fût extérieur (312b) dont le diamètre extérieur est égal au diamètre du deuxième alésage (310), où l'épaulement extérieur (312a) et le fût extérieur (312b) sont percés d'un troisième alésage (312c) dont l'axe est désaxé par rapport à l'axe du fût extérieur (312b) et parallèle au premier axe (308), la bague intérieure (314) présente un épaulement intérieur (314a) en appui contre l'épaulement extérieur (312a) du côté opposé à l'autre parmi la deuxième poutre (164) ou la première poutre (162) et un fût intérieur (314b) dont le diamètre extérieur est égal au diamètre du troisième alésage (312c), où l'épaulement intérieur (314a) et le fût intérieur (314b) sont percés d'un quatrième alésage (314c) dont l'axe (318) est désaxé par rapport à l'axe du fût intérieur (314b) et parallèle au premier axe (308) et dont le diamètre est égal au diamètre du premier alésage (306) et la tige de la vis (311) est insérée dans le quatrième alésage (314c) et le premier alésage (306), la tête de la vis (311) est contre l'épaulement intérieur (314a) et l'écrou (313) est contre l'une parmi la première poutre (162) ou la deuxième poutre (164) à l'opposé de l'autre parmi la deuxième poutre (164) ou la première poutre (162), et **en ce que** pour chaque troisième moyen de fixation (50c), l'une parmi l'une des troisièmes poutres (166a-b) ou la deuxième poutre (164) présente un premier alésage (306) dont le premier axe (308) est parallèle aux axes de rotation dudit troisième système de fixation (50c), l'autre parmi la deuxième poutre (164) ou l'une des troisièmes poutres (166a-b) présente un deuxième alésage (310) dont l'axe est parallèle au premier axe (308), la bague extérieure (312) présente un épaulement extérieur (312a) en appui contre l'autre parmi la deuxième poutre (164) ou l'une des troisièmes poutres (166a-b) du côté opposé à l'une parmi l'une des troisièmes poutres (166a-b) ou la deuxième poutre (164) et un fût extérieur (312b) dont le diamètre extérieur est égal au diamètre du deuxième alésage (310), où l'épaulement extérieur (312a) et le fût extérieur (312b) sont percés d'un troisième alésage (312c) dont l'axe est désaxé par rapport à l'axe du fût extérieur (312b) et parallèle au premier axe (308), la bague intérieure (314) présente un épaulement intérieur (314a) en appui contre l'épaulement extérieur (312a) du côté opposé à l'autre parmi la deuxième poutre (164) ou l'une des troisièmes poutres (166a-b) et un fût intérieur (314b) dont le diamètre extérieur est égal au diamètre du troisième alésage (312c), où l'épaulement intérieur (314a) et le fût intérieur (314b) sont percés d'un quatrième alésage (314c) dont l'axe (318) est désaxé par rapport à l'axe du fût intérieur (314b) et parallèle au premier axe (308) et dont le diamètre est égal au diamètre du premier alésage (306) et la tige de la vis (311) est insérée dans le quatrième alésage (314c) et le premier alésage (306), la tête de la vis (311) est contre l'épaulement intérieur (314a) et l'écrou (313) est contre l'une parmi l'une des troisièmes poutres (166a-b) ou la deuxième poutre (164) à l'opposé de l'autre parmi la deuxième poutre (164) ou l'une des troisièmes poutres (166a-b).

6. Aéronef (100) comportant une structure (168) et un ensemble (200, 400) selon la revendication 1 ou la revendication 2 où chaque troisième poutre (166a-b) est fixée à ladite structure (168).

7. Aéronef (100) selon la revendication 6, **caractérisé en ce que** les axes de rotation des premiers moyens de fixation (50a) sont orientés selon une première direction, **en ce que** les axes de rotation des deuxièmes moyens de fixation (50b) sont orientés selon une deuxième direction, **en ce que** les axes de rotation des troisièmes moyens de fixation (50c) sont orientés selon une troisième direction, **en ce que** la première direction est parallèle à une direction verticale (Z) de l'aéronef (100), **en ce que** la deuxième direction est parallèle à une direction longitudinale (X) de l'aéronef (100) et **en ce que** la troisième direction est parallèle à une direction transversale (Y) de l'aéronef (100).

8. Aéronef (100) selon l'une des revendications 6 ou 7, **caractérisé en ce que** chaque troisième poutre (166a-b) est fixée à la structure (168) par deux quatrièmes systèmes de fixation (50d) où chaque quatrième moyen de fixation (50d) prend la forme d'un système à deux bagues excentriques (312, 314) où les deux bagues (312, 314) sont mobiles en rotation l'une par rapport à l'autre autour d'axes de rotation parallèles.

9. Aéronef (100) selon la revendication 8, **caractérisé en ce que** chaque quatrième système de fixation (50d) comporte une vis (311), un écrou (313), une bague extérieure (312) et une bague intérieure (314) et **en ce que** pour chaque quatrième moyen de fixation (50d), l'une parmi la troisième poutre (166a-b) ou la structure (168) présente un premier alésage (306) dont le premier axe (308) est parallèle aux axes de rotation dudit quatrième moyen de fixation (50d), l'autre parmi la structure (168) ou la troisième poutre (166a-b) présente un deuxième alésage (310) dont l'axe est parallèle au premier axe (308), la bague extérieure (312) présente un épaulement extérieur (312a) en appui contre l'autre parmi la structure (168) ou la troisième poutre (166a-b) du côté opposé à l'une parmi la troisième poutre (166a-b) ou la structure (168) et un fût extérieur (312b) dont le diamètre extérieur est égal au diamètre du deuxième alésage (310), où l'épaulement extérieur (312a) et le fût extérieur (312b) sont percés d'un troisième alésage (312c) dont l'axe est désaxé par rapport à l'axe du fût extérieur (312b) et parallèle au premier axe (308), la bague intérieure (314) présente un épaulement intérieur (314a) en appui contre l'épaulement extérieur (312a) du côté opposé à l'autre parmi la structure (168) ou la troisième poutre (166a-b) et un fût intérieur (314b) dont le diamètre extérieur est égal au diamètre du troisième alésage (312c), où l'épaulement intérieur (314a) et le fût intérieur (314b) sont percés d'un quatrième alésage (314c) dont l'axe (318) est désaxé par rapport à l'axe du fût intérieur (314b) et parallèle au premier axe (308) et dont le diamètre est égal au diamètre du premier alésage (306) et la tige de la vis (311) est insérée dans le quatrième alésage (314c) et le premier alésage (306), la tête de la vis (311) est contre l'épaulement intérieur (314a) et l'écrou (313) est contre l'une parmi la troisième poutre (166a-b) ou la structure (168) à l'opposé de l'autre parmi la structure (168) ou la troisième poutre (166a-b).

10. Aéronef (100) selon la revendication 9, **caractérisé en ce que** les axes de rotation de chaque quatrième moyen de fixation (50d) sont orientés selon une direction parallèle à une direction longitudinale (X) de l'aéronef (100).

## Patentansprüche

1. Anordnung (200, 400) für ein Flugzeug (100), wobei die Anordnung (200, 400) Folgendes umfasst:
- ein Sichtmodul (152) eines Systems für verbesserte Flugsicht (150), das eine Basis (156) umfasst, und
- einen Rahmen (160), der Folgendes umfasst:
- einen ersten Träger (162, 462a-b), an dem die Basis (156) durch vier erste Befestigungsmittel (50a) befestigt ist,
- einen zweiten Träger (164), an dem der erste Träger (162) durch vier zweite Befestigungsmittel (50b) befestigt ist, und
- zwei dritte Träger (166a-b), die dazu bestimmt sind, an einer Struktur (168) des Flugzeugs (100) befestigt zu werden, und zwischen denen der zweite Träger (164) durch zwei dritte Befestigungsmittel (50c) mit jedem dritten Träger (166a-b) befestigt ist, wobei jedes Befestigungsmittel (50a-c) die Form eines Systems mit zwei exzentrischen Ringen (312, 314) aufweist, wobei die zwei Ringe (312, 314) um parallele Drehachsen zueinander drehbeweglich sind.

2. Anordnung (400) für ein Flugzeug (100), wobei die Anordnung (400) Folgendes umfasst:
- ein Sichtmodul (152) eines Systems für verbesserte Flugsicht (150), das eine Basis (156) umfasst, und- einen Rahmen (160), der Folgendes umfasst:
- zwei erste Träger (462a-b), wobei die Basis (156) durch zwei erste Befestigungsmittel (50a) an jedem ersten Träger (462a-b) befestigt ist,
- einen zweiten Träger (164), an dem jeder erste Träger (462a-b) durch zwei zweite Befestigungsmittel (50b) befestigt ist, und
- zwei dritte Träger (166a-b), die dazu bestimmt sind, an einer Struktur (168) des Flugzeugs (100) befestigt zu werden, und zwischen denen der zweite Träger (164) durch zwei dritte Befestigungsmittel (50c) mit jedem dritten Träger (166a-b) befestigt ist,
wobei jedes Befestigungsmittel (50a-c) die Form eines Systems mit zwei exzentrischen Ringen (312, 314) aufweist, wobei die zwei Ringe (312, 314) um parallele Drehachsen zueinander drehbeweglich sind.

3. Anordnung (200, 400) nach einem der Ansprüche 1 oder 2, **dadurch gekennzeichnet, dass** die Drehachsen der ersten Befestigungsmittel (50a) entlang einer ersten Richtung ausgerichtet sind, dass die Drehachsen der zweiten Befestigungsmittel (50b) entlang einer zweiten Richtung ausgerichtet sind, dass die Drehachsen der dritten Befestigungsmittel (50c) entlang einer dritten Richtung ausgerichtet sind und dass die erste Richtung, die zweite Richtung und die dritte Richtung alle unterschiedlich sind.

4. Anordnung (200, 400) nach Anspruch 2, **dadurch gekennzeichnet, dass** die erste Richtung, die zweite Richtung und die dritte Richtung jeweils paarweise orthogonal zueinander sind.

5. Anordnung (200, 400) nach einem der Ansprüche 1 bis 4, **dadurch gekennzeichnet, dass** jedes Befestigungssystem (50a-c) eine Schraube (311), eine Mutter (313), einen Außenring (312) und einen Innenring (314) umfasst, dass für jedes erste Befestigungsmittel (50a) eines von dem ersten Träger (162) oder der Basis (156) eine erste Bohrung (306) aufweist, deren erste Achse (308) zu den Drehachsen des ersten Befestigungssystems (50a) parallel ist, das andere von der Basis (156) oder dem ersten Träger (162) eine zweite Bohrung (310) aufweist, deren Achse zu der ersten Achse (308) parallel ist, der Außenring (312) eine Außenschulter (312a), die an dem anderen von der Basis (156) oder dem ersten Träger (162) auf der zu dem einen von dem ersten Träger (162) oder der Basis (156) entgegengesetzten Seite anliegt, und eine Außenhülse (312b), deren Außendurchmesser gleich dem Durchmesser der zweiten Bohrung (310) ist, aufweist, wobei die Außenschulter (312a) und die Außenhülse (312b) von einer dritten Bohrung (312c) durchquert werden, deren Achse in Bezug auf die Achse der Außenhülse (312b) versetzt und zu der ersten Achse (308) parallel ist, der Innenring (314) eine Innenschulter (314a), die an der Außenschulter (312a) auf der zu dem anderen von der Basis (156) oder dem ersten Träger (162) entgegengesetzten Seite anliegt, und eine Innenhülse (314b), deren Außendurchmesser gleich dem Durchmesser der dritten Bohrung (312c) ist, aufweist, wobei die Innenschulter (314a) und die Innenhülse (314b) von einer vierten Bohrung (314c) durchquert werden, deren Achse (318) in Bezug auf die Achse der Innenhülse (314b) versetzt und zu der ersten Achse (308) parallel ist und deren Durchmesser gleich dem Durchmesser der ersten Bohrung (306) ist, und der Schaft der Schraube (311) in die vierte Bohrung (314c) und die erste Bohrung (306) eingeführt wird, der Kopf der Schraube (311) gegen die Innenschulter (314a) stößt und die Mutter (313) gegen eines von dem ersten Träger (162) oder der Basis (156) gegenüber dem anderen von der Basis (156) oder dem ersten Träger (162) stößt, dass für jedes zweite Befestigungsmittel (50b) einer von dem ersten Träger (162) oder dem zweiten Träger (164) eine erste Bohrung (306) aufweist, deren erste Achse (308) zu den Drehachsen des zweiten Befestigungssystems (50b) parallel ist, der andere von dem zweiten Träger (164) oder dem ersten Träger (162) eine zweite Bohrung (310) aufweist, deren Achse zu der ersten Achse (308) parallel ist, der Außenring (312) eine Außenschulter (312a), die an dem anderen von dem zweiten Träger (164) oder dem ersten Träger (162) auf der zu dem einen von dem ersten Träger (162) oder dem zweiten Träger (164) entgegengesetzten Seite anliegt, und eine Außenhülse (312b), deren Außendurchmesser gleich dem Durchmesser der zweiten Bohrung (310) ist, aufweist, wobei die Außenschulter (312a) und die Außenhülse (312b) von einer dritten Bohrung (312c) durchquert werden, deren Achse in Bezug auf die Achse der Außenhülse (312b) versetzt und zu der ersten Achse (308) parallel ist, der Innenring (314) eine Innenschulter (314a), die an der Außenschulter (312a) auf der zu dem anderen von dem zweiten Träger (164) oder dem ersten Träger (162) entgegengesetzten Seite anliegt, und eine Innenhülse (314b), deren Außendurchmesser gleich dem Durchmesser der dritten Bohrung (312c) ist, aufweist, wobei die Innenschulter (314a) und die Innenhülse (314b) von einer vierten Bohrung (314c) durchquert werden, deren Achse (318) in Bezug auf die Achse der Innenhülse (314b) versetzt und zu der ersten Achse (308) parallel ist und deren Durchmesser gleich dem Durchmesser der ersten Bohrung (306) ist, und der Schaft der Schraube (311) in die vierte Bohrung (314c) und die erste Bohrung (306) eingeführt wird, der Kopf der Schraube (311) gegen die Innenschulter (314a) stößt und die Mutter (313) gegen einen von dem ersten Träger (162) oder dem zweiten Träger (164) gegenüber dem anderen von dem zweiten Träger (164) oder dem ersten Träger (162) stößt, und dass für jedes dritte Befestigungsmittel (50c) einer von einem der dritten Träger (166a-b) oder dem zweiten Träger (164) eine erste Bohrung (306) aufweist, deren erste Achse (308) zu den Drehachsen des dritten Befestigungssystems (50c) parallel ist, der andere von dem zweiten Träger (164) oder einem der dritten Träger (166a-b) eine zweite Bohrung (310) aufweist, deren Achse zu der ersten Achse (308) parallel ist, der Außenring (312) eine Außenschulter (312a), die an dem anderen von dem zweiten Träger (164) oder einem der dritten Träger (166a-b) auf der zu dem einen von einem der dritten Träger (166a-b) oder dem zweiten Träger (164) entgegengesetzten Seite anliegt, und eine Außenhülse (312b), deren Außendurchmesser gleich dem Durchmesser der zweiten Bohrung (310) ist, aufweist, wobei die Außenschulter (312a) und die Außenhülse (312b) von einer dritten Bohrung (312c) durchquert werden, deren Achse in Bezug auf die Achse der Außenhülse (312b) versetzt und zu der ersten Achse (308) parallel ist, der Innenring (314) eine Innenschulter (314a), die an der Außenschulter (312a) auf der zu dem anderen von dem zweiten Träger (164) oder einem der dritten Träger (166a-b) entgegengesetzten Seite anliegt, und eine Innenhülse (314b), deren Außendurchmesser gleich dem Durchmesser der dritten Bohrung (312c) ist, aufweist, wobei die Innenschulter (314a) und die Innenhülse (314b) von einer vierten Bohrung (314c) durchquert werden, deren Achse (318) in Bezug auf die Achse der Innenhülse (314b) versetzt und zu der ersten Achse (308) parallel ist und deren Durchmesser gleich dem Durchmesser der ersten Bohrung (306) ist, und der Schaft der Schraube (311) in die vierte Bohrung (314c) und die erste Bohrung (306) eingeführt wird, der Kopf der Schraube (311) gegen die Innenschulter (314a) stößt und die Mutter (313) gegen einen von einem der dritten Träger (166a-b) oder dem zweiten Träger (164) gegenüber dem anderen von dem zweiten Träger (164) oder einem der dritten Träger (166a-b) stößt.

6. Flugzeug (100), das eine Struktur (168) und eine Anordnung (200, 400) nach Anspruch 1 oder Anspruch 2 umfasst, wobei jeder dritte Träger (166a-b) an der Struktur (168) befestigt ist.

7. Flugzeug (100) nach Anspruch 6, **dadurch gekennzeichnet, dass** die Drehachsen der ersten Befestigungsmittel (50a) entlang einer ersten Richtung ausgerichtet sind, dass die Drehachsen der zweiten Befestigungsmittel (50b) entlang einer zweiten Richtung ausgerichtet sind, dass die Drehachsen der dritten Befestigungsmittel (50c) entlang einer dritten Richtung ausgerichtet sind, dass die erste Richtung parallel zu einer vertikalen Richtung (Z) des Flugzeugs (100) ist, dass die zweite Richtung parallel zu einer Längsrichtung (X) des Flugzeugs (100) ist und dass die dritte Richtung parallel zu einer Querrichtung (Y) des Flugzeugs (100) ist.

8. Flugzeug (100) nach einem der Ansprüche 6 oder 7, **dadurch gekennzeichnet, dass** jeder dritte Träger (166ab) durch zwei vierte Befestigungssysteme (50d) an der Struktur (168) befestigt ist, wobei jedes vierte Befestigungsmittel (50d) die Form eines Systems mit zwei exzentrischen Ringen (312, 314) aufweist, wobei die zwei Ringe (312, 314) um parallele Drehachsen zueinander drehbeweglich sind.

9. Flugzeug (100) nach Anspruch 8, **dadurch gekennzeichnet, dass** jedes vierte Befestigungssystem (50d) eine Schraube (311), eine Mutter (313), einen Außenring (312) und einen Innenring (314) umfasst und dass für jedes vierte Befestigungsmittel (50d) eines von dem dritten Träger (166a-b) oder der Struktur (168) eine erste Bohrung (306) aufweist, deren erste Achse (308) zu den Drehachsen des vierten Befestigungsmittels (50d) parallel ist, das andere von der Struktur (168) oder dem dritten Träger (166a-b) eine zweite Bohrung (310) aufweist, deren Achse zu der ersten Achse (308) parallel ist, der Außenring (312) eine Außenschulter (312a), die an dem anderen von der Struktur (168) oder dem dritten Träger (166a-b) auf der zu dem einen von dem dritten Träger (166a-b) oder der Struktur (168) entgegengesetzten Seite anliegt, und eine Außenhülse (312b), deren Außendurchmesser gleich dem Durchmesser der zweiten Bohrung (310) ist, aufweist, wobei die Außenschulter (312a) und die Außenhülse (312b) von einer dritten Bohrung (312c) durchquert werden, deren Achse in Bezug auf die Achse der Außenhülse (312b) versetzt und zu der ersten Achse (308) parallel ist, der Innenring (314) eine Innenschulter (314a), die an der Außenschulter (312a) auf der zu dem anderen von der Struktur (168) oder dem dritten Träger (166a-b) entgegengesetzten Seite anliegt, und eine Innenhülse (314b), deren Außendurchmesser gleich dem Durchmesser der dritten Bohrung (312c) ist, aufweist, wobei die Innenschulter (314a) und die Innenhülse (314b) von einer vierten Bohrung (314c) durchquert werden, deren Achse (318) in Bezug auf die Achse der Innenhülse (314b) versetzt und zu der ersten Achse (308) parallel ist und deren Durchmesser gleich dem Durchmesser der ersten Bohrung (306) ist, und der Schaft der Schraube (311) in die vierte Bohrung (314c) und die erste Bohrung (306) eingeführt wird, der Kopf der Schraube (311) gegen die Innenschulter (314a) stößt und die Mutter (313) gegen eines von dem dritten Träger (166a-b) oder der Struktur (168) gegenüber dem anderen von der Struktur (168) oder dem dritten Träger (166a-b) stößt.

10. Flugzeug (100) nach Anspruch 9, **dadurch gekennzeichnet, dass** die Drehachsen jedes vierten Befestigungsmittels (50d) entlang einer Richtung parallel zu einer Längsrichtung (X) des Flugzeugs (100) ausgerichtet sind.

## Claims

1. Assembly (200, 400) for an aircraft (100), said assembly (200, 400) including:
- a vision module (152) of an enhanced flight vision system (150) including a base (156), and
- a chassis (160) including:
- a first beam (162) to which the base (156) is fixed by four first fixing means (50a),
- a second beam (164) to which the first beam (162) is fixed by four second fixing means (50b), and
- two third beams (166a-b) intended to be fixed to a structure (168) of the aircraft (100) and between which the second beam (164) is fixed by two third fixing means (50c) with each third beam (166a-b),
where each fixing means (50a-c) takes the form of a system with two eccentric rings (312, 314) where the two rings (312, 314) are mobile in rotation relative to one another about parallel rotation axes.

2. Assembly (400) for an aircraft (100), said assembly (400) including:
- a vision module (152) of an enhanced flight vision system (150) including a base (156), and
- a chassis (160) including:
- two first beams (462a-b) where the base (156) is fixed to each first beam (462a-b) by two first fixing means (50a),
- a second beam (164) to which each first beam (462a-b) is fixed by two second fixing means (50b), and
- two third beams (166a-b) intended to be fixed to a structure (168) of the aircraft (100) and between which the second beam (164) is fixed by two third fixing means (50c) with each third beam (166a-b),
where each fixing means (50a-c) takes the form of a system with two eccentric rings (312, 314) where the two rings (312, 314) are mobile in rotation relative to one another about parallel rotation axes.

3. Assembly (200, 400) according to either one of claims 1 or 2, **characterised in that** the rotation axes of the first fixing means (50a) are oriented in a first direction, **in that** the rotation axes of the second fixing means (50b) are oriented in a second direction, **in that** the rotation axes of the third fixing means (50c) are oriented in a third direction, and **in that** the first direction, the second direction and the third direction are all different.

4. Assembly (200, 400) according to claim 2, **characterised in that** the first direction, the second direction and the third direction are mutually orthogonal two-by-two.

5. Assembly (200, 400) according to any one of claims 1 to 4, **characterised in that** each fixing system (50a-c) includes a screw (311), a nut (313), an outer ring (312) and an inner ring (314), **in that** for each first fixing means (50a) one of the first beam (162) or the base (156) includes a first bore (306) the first axis (308) of which is parallel to the rotation axes of said first fixing system (50a), the other of the base (156) or the first beam (162) includes a second bore (310) the axis of which is parallel to the first axis (308), the outer ring (312) has an outer shoulder (312a) bearing against the other of the base (156) or the first beam (162) on the side opposite one of the first beam (162) or the base (156) and an outer bush (312b) the outside diameter of which is equal to the diameter of the second bore (310), where the outer shoulder (312a) and the outer bush (312b) are pierced by a third bore (312c) the axis of which is offset relative to the axis of the outer bush (312b) and parallel to the first axis (308), the inner ring (314) includes an inner shoulder (314a) bearing against the outer shoulder (312a) on the side opposite the other of the base (156) or the first beam (162) and an inner bush (314b) the outside diameter of which is equal to the diameter of the third bore (312c), where the inner shoulder (314a) and the inner bush (314b) are pierced by a fourth bore (314c) the axis (318) of which is offset relative to the axis of the inner bush (314b) and parallel to the first axis (308) and the diameter of which is equal to the diameter of the first bore (306), and the shank of the screw (311) is inserted in the fourth bore (314c) and the first bore (306), the head of the screw (311) is against the inner shoulder (314a) and the nut (313) is against one of the first beam (162) or the base (156) opposite the other of the base (156) or the first beam (162), **in that** for each second fixing means (50b) one of the first beam (162) or the second beam (164) includes a first bore (306) the first axis (308) of which is parallel to the rotation axes of said second fixing system (50b), the other of the second beam (164) or the first beam (162) includes a second bore (310) the axis of which is parallel to the first axis (308), the outer ring (312) includes an outer shoulder (312a) bearing against the other of the second beam (164) or the first beam (162) on the side opposite one of the first beam (162) or the second beam (164) and an outer bush (312b) the outside diameter of which is equal to the diameter of the second bore (310), where the outer shoulder (312a) and the outer bush (312b) are pierced by a third bore (312c) the axis of which is offset relative to the axis of the outer bush (312b) and parallel to the first axis (308), the inner ring (314) includes an inner shoulder (314a) bearing against the outer shoulder (312a) on the side opposite the other of the second beam (164) or the first beam (162) and an inner bush (314b) the outside diameter of which is equal to the diameter of the third bore (312c), where the inner shoulder (314a) and the inner bush (314b) are pierced by a fourth bore (314c) the axis (318) offset relative to the axis of the inner bush (314b) parallel to the first axis (308) and the diameter of which is equal to the diameter of the first bore (306) and the shank of the screw (311) is inserted in the fourth bore (314c) and the first bore (306), the head of the screw (311) is against the inner shoulder (314a) and the nut (313) is against one of the first beam (162) or the second beam (164) opposite the other of the second beam (164) or the first beam (162), and **in that** for each third fixing means (50c) one of one of the third beams (166a-b) or the second beam (164) includes a first bore (306) the first axis (308) of which is parallel to the rotation axes of said third fixing system (50c), the other of the second beam (164) or one of the third beams (166a-b) includes a second bore (310) the axis of which is parallel to the first axis (308), the outer ring (312) includes an outer shoulder (312a) bearing against the other of the second beam (164) or one of the third beams (166a-b) on the side opposite one of one of the third beams (166a-b) or the second beam (164) and an outer bush (312b) the outside diameter of which is equal to the diameter of the second bore (310), where the outer shoulder (312a) and the outer bush (312b) are pierced by a third bore (312c) the axis of which is offset relative to the axis of the outer bush (312b) and parallel to the first axis (308), the inner ring (314) includes an inner shoulder (314a) bearing against the outer shoulder (312a) on the side opposite the other of the second beam (164) or one of the third beams (166a-b) and an inner bush (314b) the outside diameter of which is equal to the diameter of the third bore (312c), where the inner shoulder (314a) and the inner bush (314b) are pierced by a fourth bore (314c) the axis (318) of which is offset relative to the axis of the inner bush (314b) and parallel to the first axis (308) and the diameter of which is equal to the diameter of the first bore (306) and the shank of the screw (311) is inserted in the fourth bore (314c) and the first bore (306), the head of the screw (311) is against the inner shoulder (314a) and the nut (313) is against one of one of the third beams (166a-b) or the second beam (164) opposite the other of the second beam (164) and one of the third beams (166a-b).

6. Aircraft (100) including a structure (168) and an assembly (200, 400) according to claim 1 or claim 2 where each third beam (166a-b) is fixed to said structure (168).

7. Aircraft (100) according to claim 6, **characterised in that** the rotation axes of the first fixing means (50a) are oriented in a first direction, **in that** the rotation axes of the second fixing means (50b) are oriented in a second direction, **in that** the rotation axes of the third fixing means (50c) are oriented in a third direction, **in that** the first direction is parallel to a vertical direction (Z) of the aircraft (100), **in that** the second direction is parallel to a longitudinal direction (X) of the aircraft (100) and **in that** the third direction is parallel to a transverse direction (Y) of the aircraft (100).

8. Aircraft (100) according to either one of claims 6 or 7, **characterised in that** each third beam (166a-b) is fixed to the structure (168) by two fourth fixing systems (50d) where each fourth fixing means (50d) takes the form of a system with two eccentric rings (312, 314) where the two rings (312, 314) are mobile in rotation relative to one another about parallel rotation axes.

9. Aircraft (100) according to claim 8, **characterised in that** each fourth fixing system (50d) includes a screw (311), a nut (313), an outer ring (312) and an inner ring (314) and **in that** for each fourth fixing means (50d) one of the third beam (166a-b) or the structure (168) includes a first bore (306) the first axis (308) of which is parallel to the rotation axes of said fourth fixing means (50d), the other of the structure (168) or the third beam (166a-b) includes a second bore (310) the axis of which is parallel to the first axis (308), the outer ring (312) includes an outer shoulder (312a) bearing against the other of the structure (168) or the third beam (166a-b) on the side opposite one of the third beam (166a-b) or the structure (168) and an outer bush (312b) the outside diameter of which is equal to the diameter of the second bore (310), where the outer shoulder (312a) and the outer bush (312b) are pierced by a third bore (312c) the axis of which is offset relative to the axis of the outer bush (312b) and parallel to the first axis (308), the inner ring (314) includes an inner shoulder (314a) bearing against the outer shoulder (312a) on the side opposite the other of the structure (168) or the third beam (166a-b) and an inner bush (314b) the outside diameter of which is equal to the diameter of the third bore (312c), where the inner shoulder (314a) and the inner bush (314b) are pierced by a fourth bore (314c) the axis (318) of which is offset relative to the axis of the inner bush (314b) and parallel to the first axis (308) and the diameter of which is equal to the diameter of the first bore (306) and the shank of the screw (311) is inserted in the fourth bore (314c) and the first bore (306), the head of the screw (311) is against the inner shoulder (314a) and the nut (313) is against one of the third beam (166a-b) or the structure (168) opposite the other of the structure (168) or the third beam (166a-b).

10. Aircraft (100) according to claim 9, **characterised in that** the rotation axes of each fourth fixing means (50d) are oriented in a direction parallel to a longitudinal direction (X) of the aircraft (100).
